# EUROPEAN PATENT APPLICATION

(11) **EP 4 681 550 A1**
(43) Date of publication of application: **21.01.2026**
(21) Application number: 24770237.6
(22) Date of filing: 29.01.2024
(51) Int. Cl.: A23L 23/10, A23L 23/00

(54) **PACKAGED LIQUID OR PASTY FOOD COMPOSITION, METHOD FOR MANUFACTURING SAME, AND USE APPLICATION OF SAME**

(30) Priority: 16.03.2023 JP 2023041949
(71) Applicant: House Foods Corporation, Higashi-Osaka-shi, Osaka 577-8520 (JP)
(72) Inventor: MASUKO, Hitomi, Higashiosaka-shi, Osaka 577-8520 (JP)
(74) Representative: Global IP Europe Patentanwaltskanzlei
(86) International application number: PCT/JP2024/002623
(87) International publication number: WO 2024/190117

(57) **Abstract**

The present invention provides a liquid or pasty packaged food composition containing starch that can be cooked with water to prepare a viscous liquid food product, without using hot water as the water and with fewer times of stirring to reduce undissolved residues or lumps. One or more embodiments of the present invention pertain to a liquid or pasty packaged food composition comprising a liquid or pasty food composition and a container storing the liquid or pasty food composition, wherein the liquid or pasty food composition contains pregelatinized crosslinked starch and water and is water-based.

## Description

### FIELD

The present invention relates to a liquid or pasty packaged food composition, a method for producing the liquid or pasty packaged food composition, and use of the liquid or pasty packaged food composition.

### BACKGROUND

Known liquid or pasty food compositions containing starch have been used as a base for viscous liquid food products such as soups or sauces. When the compositions are mixed with water and heated, liquid food products with intended viscosity are obtained.

As described in Patent Literature 1, when a pasty food base such as a roux containing starch is dispersed in water in a container such as a hotel pan and cooked with ingredients added as appropriate in a steam convection oven, the mixture cannot be stirred during cooking and thus cannot achieve uniform viscosity, and is likely to form a deposit. Patent Literature 1 thus describes a pasty food base appropriate for cooking in a steam convection oven. The pasty food base contains oil or fat components that are 45 to 55% by mass of the total amount of the base, and solid components. The oil or fat components contain a liquid oil that is 20 to 45% by mass of the total amount of the base and a solid fat that is 10 to 30% by mass of the total amount of the base. The solid components contain, of the total amount of the base, 5 to 15% by mass of raw starch and 0.05 to 25% by mass of a water-soluble viscous agent that produces viscosity when dissolved in water. As described in Patent Literature 1, the pasty food base can be dispersed uniformly by adding hot water, and cooking in a steam convection oven can achieve uniform viscosity. Patent Literature 1 describes pregelatinized starch, gum, pulp, or another substance as the viscous agent. Examples of the pregelatinized starch include pregelatinized acetylated distarch adipate.

Patent Literature 2 describes a method for producing a packaged pasty roux containing starch, water, and glucide. The roux may further contain salt. As described in Patent Literature 1, the starch as a mixture of pregelatinized starch and unpregelatinized starch is less likely cause starch sedimentation and separation in the pasty roux than the starch as unpregelatinized starch.

### CITATION LIST

### PATENT LITERATURE

Patent Literature 1: Japanese Unexamined Patent Application Publication No. 2022-146727
Patent Literature 2: Japanese Unexamined Patent Application Publication No. 2002-233339

### BRIEF SUMMARY

### TECHNICAL PROBLEM

In producing a viscous liquid food product such as a soup or a sauce by cooking a mixture containing a liquid or pasty food composition containing starch and water as well as ingredients further added as appropriate, stirring the mixture sufficiently to obtain homogeneous mixture before and during cooking effectively reduces undissolved residues of the liquid or pasty food composition containing starch or agglomerates (lumps) of gelatinized starch. However, professional-grade pans used in restaurants or lodging facilities are large. Thus, the mixture in such a pan may not be easily stirred frequently.

The pasty food base described in Patent Literature 1 is an oil-based composition containing an oil or a fat as a continuous phase. When the pasty food base is added to hot water, the oil or fat dissolves, and the resultant mixture includes uniformly dispersed solid components. In Patent Literature 1, the homogeneous mixture obtained with hot water is cooked to provide a uniformly viscous liquid food product, although the mixture is not stirred during cooking. However, the pasty food base described in Patent Literature 1 is preferably used with separately prepared hot water, and may have a limited range of use.

One or more aspects of the disclosure are directed to a liquid or pasty packaged food composition containing starch that can be cooked with water to prepare a viscous liquid food product, without using, as the water, water with a temperature higher than room temperature (in other words, hot water) and with fewer times of stirring to reduce undissolved residues or agglomerates (lumps) of gelatinized starch.

### SOLUTION TO PROBLEM

The inventor has noticed that the liquid or pasty packaged food composition according to one or more embodiments of the present invention described below can reduce undissolved residues or agglomerates of gelatinized starch with fewer times of stirring when the liquid or pasty packaged food composition is mixed with water and cooked to prepare a viscous liquid food product, and that the water may or may not be water with a temperature higher than room temperature. The liquid or pasty packaged food composition according to one or more embodiments of the present invention can have the aspects described below.
(1) A liquid or pasty packaged food composition, comprising:
   a liquid or pasty food composition containing pregelatinized crosslinked starch and water, the liquid or pasty food composition being water-based; and
   a container storing the liquid or pasty food composition.
(2) The liquid or pasty packaged food composition according to (1), wherein
   the pregelatinized crosslinked starch is at least one selected from the group consisting of pregelatinized hydroxypropyl distarch phosphate, pregelatinized acetylated distarch adipate, pregelatinized distarch phosphate, and pregelatinized acetylated distarch phosphate.
(3) The liquid or pasty packaged food composition according to (1) or (2), wherein
   a content of the pregelatinized crosslinked starch is 0.1 to 50% by mass, inclusive, based on a total amount of the liquid or pasty food composition.
(4) The liquid or pasty packaged food composition according to any one of (1) to (3), wherein a content of the water is greater than or equal to 10% by mass and less than 70% by mass based on a total amount of the liquid or pasty food composition.
(5) The liquid or pasty packaged food composition according to any one of (1) to (4), wherein
   the liquid or pasty food composition further contains at least one selected from the group consisting of non-pregelatinized starch and a thickener.
(6) The liquid or pasty packaged food composition according to (5), wherein
   the liquid or pasty food composition contains less than or equal to 200 parts by mass of the non-pregelatinized starch with respect to 100 parts by mass of the pregelatinized crosslinked starch.
(7) The liquid or pasty packaged food composition according to (5) or (6), wherein
   the liquid or pasty food composition contains less than or equal to 100 parts by mass of the thickener with respect to 100 parts by mass of the pregelatinized crosslinked starch.
(8) The liquid or pasty packaged food composition according to any one of (1) to (7), wherein
   the liquid or pasty food composition further contains 1 to 40% by mass, inclusive, of at least one of an oil or a fat.
(9) The liquid or pasty packaged food composition according to any one of (1) to (8), wherein
   the liquid or pasty food composition is heated and sterilized at a temperature lower than or equal to 110 °C.
(10) A method for producing the liquid or pasty packaged food composition according to (9), the method comprising:
   (a) producing the liquid or pasty food composition; and
   (b1) heating and sterilizing the liquid or pasty food composition produced in (a) at a temperature lower than or equal to 110 °C; and
   (c1) storing and sealing the liquid or pasty food composition heated and sterilized in (b1) in the container, or
   (b2) storing and sealing the liquid or pasty food composition produced in (a) in the container; and
   (c2) heating and sterilizing the liquid or pasty food composition in the container sealed in (b2) at a temperature lower than or equal to 110 °C.
(11) A method for producing a viscous liquid food product, the method comprising:
   removing, from the liquid or pasty packaged food composition according to any one of (1) to (9), the liquid or pasty food composition;
   mixing the liquid or pasty food composition with water; and
   heating a mixture of the liquid or pasty food composition and the water.

### ADVANTAGEOUS EFFECTS

The liquid or pasty packaged food composition according to one or more embodiments of the present invention can reduce undissolved residues or agglomerates of gelatinized starch with fewer times of stirring when the liquid or pasty food composition is mixed with water and cooked to prepare a viscous liquid food product.

The water mixed with the liquid or pasty packaged food composition according to one or more embodiments of the present invention before the cooking may or may not be water with a temperature higher than room temperature (hot water).

### DETAILED DESCRIPTION

### Liquid or Pasty Packaged Food Composition

A liquid or pasty packaged food composition according to one or more embodiments of the present invention comprises a liquid or pasty food composition that contains pregelatinized crosslinked starch and water and is water-based, and a container storing the liquid or pasty food composition.

The liquid or pasty packaged food composition according to one or more embodiments of the present invention can reduce undissolved residues or agglomerates (lumps) of gelatinized starch with fewer times of stirring when the liquid or pasty food composition is mixed with water and cooked to prepare a viscous liquid food product. Typically, even when no stirring is performed throughout the processing from mixing with water to cooking, gentle stirring after the completion of cooking can reduce undissolved residues or lumps. The liquid or pasty packaged food composition according to the present embodiment can thus be more specifically used for preparing a viscous liquid food product using a professional large pan with which frequent stirring is not easy. Water mixed with the liquid or pasty packaged food composition according to the present embodiment before cooking may or may not be water with a temperature higher than room temperature (hot water) or, for example, water of 40 to 100 °C inclusive. The liquid food product can thus be prepared through a simple operation. The water may be water with a temperature of 5 to 20 °C, such as tap water with no temperature control.

Typically, when the liquid or pasty food composition of the liquid or pasty packaged food composition according to the present embodiment is removed from the container and added to three times its amount of water at 5 to 20 °C, the composition settles in water and, when heated without stirring, forms a gelatinized deposit. However, gentle stirring after heating disperses the deposit and forms a viscous liquid food product. This surprising phenomenon does not occur when non-crosslinked pregelatinized starch or non-pregelatinized starch alone is used instead of pregelatinized crosslinked starch.

The liquid or pasty packaged food composition according to the present embodiment may be used, when heated with water, as a base for producing viscous liquid food products such as sauces including curry sauces, stew sauces, and demi-glace sauces or soups including potage.

A container for the liquid or pasty packaged food composition according to the present embodiment may be any container that can store and seal the liquid or pasty food composition in a removable manner. However, the container may be a flexible container from which the liquid or pasty food composition is squeezed out, and may preferably be, for example, a tubular container or a pouch.

The liquid or pasty food composition (hereafter also referred to as a food composition in the present embodiment) that is the content in the liquid or pasty packaged food composition according to the present embodiment has features described below.

The food composition in the present embodiment contains pregelatinized crosslinked starch and water, and is also water-based. The water-based food composition refers to a food composition with the continuous phase of water and a component dissolved in or swollen with the water. Examples of the component dissolved in or swollen with the water include pregelatinized crosslinked starch swollen with the water, other types of starch (described later), and glucide. The food composition in the present embodiment may contain an oil or a fat or other hydrophobic components as described later. The oil or fat or other hydrophobic components are dispersed as a dispersed phase in the continuous phase containing the water and the component dissolved in or swollen with the water.

In the food composition in the present embodiment, the pregelatinized crosslinked starch is starch that is pregelatinized (gelatinized) and crosslinked. The pregelatinized crosslinked starch may have any crosslink types acceptable as food products, and may preferably be at least one selected from the group consisting of pregelatinized hydroxypropyl distarch phosphate, pregelatinized acetylated distarch adipate, pregelatinized distarch phosphate, pregelatinized acetylated distarch phosphate, and pregelatinized phosphated distarch phosphate or, more preferably, at least one selected from the group consisting of pregelatinized hydroxypropyl distarch phosphate, pregelatinized acetylated distarch adipate, pregelatinized distarch phosphate, and pregelatinized acetylated distarch phosphate. The plant source of the pregelatinized crosslinked starch may be any plants acceptable as food products, and include, for example, potato, tapioca, maize, and wheat. Two or more types of pregelatinized crosslinked starch from different sources may be mixed for use.

The content of the pregelatinized crosslinked starch in the food composition in the present embodiment may have, although adjustable as appropriate based on the target dilution ratio or the target viscosity for the liquid food product, an upper limit preferably less than or equal to 50% by mass, or more preferably, less than or equal to 40% by mass, or still more preferably, less than or equal to 30% by mass, or most preferably, less than or equal to 20% by mass, and a lower limit preferably greater than or equal to 0.1% by mass, or more preferably, greater than or equal to 1% by mass, or still more preferably, greater than or equal to 5% by mass based on the total amount of the food composition in the present embodiment. In other words, the content of the pregelatinized crosslinked starch in the food composition in the present embodiment may preferably be 0.1 to 50% by mass inclusive, or more preferably, 1 to 40% by mass inclusive, or still more preferably, 5 to 30% by mass inclusive, or most preferably, 5 to 20% by mass inclusive based on the total amount of the food composition. When the content of the pregelatinized crosslinked starch is in this range, undissolved residues or lumps are particularly effectively reduced.

The content of water in the food composition in the present embodiment may have, although adjustable as appropriate based on the target dilution ratio, an upper limit preferably less than 70% by mass, or more preferably, less than or equal to 60% by mass, or still more preferably, less than or equal to 40% by mass, or most preferably , less than or equal to 30% by mass, and a lower limit preferably greater than or equal to 10% by mass, or more preferably, greater than or equal to 15% by mass based on the total amount of the food composition in the present embodiment. In other words, the content of water in the food composition in the present embodiment may preferably be greater than or equal to 10% by mass and less than 70% by mass, or more preferably, 10 to 60% by mass inclusive, or still more preferably, 15 to 40% by mass inclusive, or most preferably, 15 to 30% by mass inclusive based on the total amount of the food composition. When the content of water is in this range, undissolved residues or lumps are particularly effectively reduced.

The food composition in the present embodiment may contain the pregelatinized crosslinked starch alone as starch, or may contain at least one selected from the group consisting of non-pregelatinized starch (sometimes referred to as unpregelatinized starch or ungelatinized starch) and non-crosslinked pregelatinized starch (sometimes referred to as pregelatinized non-crosslinked starch). The food composition in the present embodiment may also contain a thickener. In an aspect that the food composition in the present embodiment contains at least one selected from the group consisting of the non-pregelatinized starch and the thickener in addition to pregelatinized crosslinked starch, the pregelatinized crosslinked starch mixed with at least one of the non-pregelatinized starch or the thickener has lower binding performance. This allows easier production. When the pregelatinized crosslinked starch, the non-pregelatinized starch, and the non-crosslinked pregelatinized starch are used as starch (e.g., wheat flour) that contains components other than starch such as proteins, the amount of the pregelatinized crosslinked starch, the non-pregelatinized starch, and the non-crosslinked pregelatinized starch herein refers to the amount as a starch material containing the components other than the starch described above.

In an aspect that the food composition in the present embodiment further contains the non-pregelatinized starch, the content of the non-pregelatinized starch (the total content when the non-pregelatinized starch includes multiple types) with respect to 100 parts by mass of the pregelatinized crosslinked starch may have an upper limit preferably less than or equal to 200 parts by mass, or more preferably, less than or equal to 150 parts by mass, or still more preferably, less than or equal to 100 parts by mass, or further preferably, less than or equal to 82 parts by mass, or most preferably, less than or equal to 80 parts by mass, and a lower limit preferably greater than or equal to 10 parts by mass, or more preferably, greater than or equal to 30 parts by mass, or still more preferably, greater than or equal to 50 parts by mass. In other words, in the food composition in the present embodiment, the content of the non-pregelatinized starch may preferably be 10 to 200 parts by mass inclusive, or more preferably, 10 to 150 parts by mass inclusive, or still more preferably, 30 to 100 parts by mass inclusive, or further preferably, 30 to 82 parts by mass inclusive, or most preferably, 50 to 80 parts by mass inclusive with respect to 100 parts by mass of the pregelatinized crosslinked starch. The food composition in the present embodiment containing greater than or equal to 10 parts by mass of the non-pregelatinized starch with respect to 100 parts by mass of the pregelatinized crosslinked starch achieves particularly high productivity. Additionally, with the content of the non-pregelatinized starch being less than or equal to 200 parts by mass with respect to 100 parts by mass of the pregelatinized crosslinked starch, undissolved residues or lumps are particularly effectively reduced when the food composition in the present embodiment is cooked with water. Although food compositions containing non-pregelatinized starch produce intended viscosity or flavor when cooked in water, undissolved residues or lumps are also produced. This issue can be solved with the food composition in the present aspect containing the pregelatinized crosslinked starch and the non-pregelatinized starch. The non-pregelatinized starch may be at least one selected from the group consisting of native starch and modified starch. The native starch may be starch produced from at least one plant source selected from the group consisting of, for example, potato, tapioca, maize, and wheat, or may be starch such as wheat flour that contains proteins or other components. The modified starch may be at least one selected from the group consisting of hydroxypropyl distarch phosphate, acetylated distarch adipate, distarch phosphate, acetylated distarch phosphate, phosphated distarch phosphate, acetylated oxidized starch, starch sodium octenyl succinate, starch acetate, oxidized starch, hydroxypropyl starch, and monostarch phosphate. The plant source of the modified starch may also be any plants, and may be at least one selected from the group consisting of, for example, potato, tapioca, maize, and wheat.

In an aspect that the food composition in the present embodiment further contains the thickener, the content of the thickener (the total content when the thickener includes multiple thickeners) with respect to 100 parts by mass of the pregelatinized crosslinked starch may have an upper limit preferably less than or equal to 100 parts by mass, or more preferably, less than or equal to 50 parts by mass, or still more preferably, less than or equal to 10 parts by mass, and a lower limit preferably greater than or equal to 0.1 parts by mass, or more preferably, greater than or equal to 1 parts by mass, or still more preferably, greater than or equal to 2 parts by mass. In other words, in the food composition in the present embodiment, the content of the thickener may preferably be 0.1 to 100 parts by mass inclusive, or more preferably, 1 to 50 parts by mass inclusive, or still more preferably, 2 to 10 parts by mass inclusive with respect to 100 parts by mass of the pregelatinized crosslinked starch. The food composition in the present embodiment containing greater than or equal to 0.1 parts by mass of the thickener with respect to 100 parts by mass of the pregelatinized crosslinked starch achieves particularly high productivity. With the content of the thickener being less than or equal to 100 parts by mass with respect to 100 parts by mass of the pregelatinized crosslinked starch, undissolved residues or lumps are particularly effectively reduced when the food composition in the present embodiment is cooked with water. Examples of the thickener include at least one selected from the group consisting of xanthan gum, locust bean gum, carrageenan, agar, tara gum, gellan gum, pectin, guar gum, and gelatin.

In an aspect that the food composition in the present embodiment further contains non-crosslinked pregelatinized starch, the content of the non-crosslinked pregelatinized starch (the total content when the non-crosslinked pregelatinized starch includes multiple types) with respect to 100 parts by mass of the pregelatinized crosslinked starch may have an upper limit preferably less than or equal to 200 parts by mass, or more preferably, less than or equal to 150 parts by mass, or still more preferably, less than or equal to 100 parts by mass, or further preferably, less than or equal to 82 parts by mass, or most preferably, less than or equal to 80 parts by mass, and a lower limit preferably greater than or equal to 10 parts by mass, or more preferably, greater than or equal to 30 parts by mass, or still more preferably, greater than or equal to 50 parts by mass. In other words, in the food composition in the present embodiment, the content of the non-crosslinked pregelatinized starch may preferably be 10 to 200 parts by mass inclusive, or more preferably, 10 to 150 parts by mass inclusive, or still more preferably, 30 to 100 parts by mass inclusive, or further preferably, 30 to 82 parts by mass inclusive, or most preferably, 50 to 80 parts by mass inclusive with respect to 100 parts by mass of the pregelatinized crosslinked starch. The non-crosslinked pregelatinized starch may be pregelatinized starch produced from at least one plant source selected from the group consisting of potato, tapioca, maize, and wheat, or pregelatinized starch of at least one type of modified starch selected from the group consisting of acetylated oxidized starch, starch sodium octenyl succinate, starch acetate, oxidized starch, hydroxypropyl starch, and monostarch phosphate.

The food composition in the present embodiment may further contain an oil or a fat. Although the food composition in the present embodiment is water-based as described above, the oil or fat may be contained as the dispersed phase. The content of the oil or fat may be any content that has an upper limit preferably less than or equal to 40% by mass, or more preferably, less than or equal to 35% by mass, and a lower limit preferably greater than or equal to 1% by mass, or more preferably, greater than or equal to 5% by mass, or still more preferably, greater than or equal to 10% by mass, or most preferably, greater than or equal to 20% by mass based on the total amount of the food composition in the present embodiment. In other words, the content of the oil or fat in the food composition in the present embodiment may preferably be 1 to 40% by mass inclusive, or more preferably, 5 to 35% by mass inclusive, or still more preferably, 20 to 35% by mass inclusive based on the total amount of the food composition. In the food composition in the present embodiment, the oil or fat may be animal fat, such as pork fat or beef fat, or vegetable oil, such as palm oil, coconut oil, rapeseed oil, corn oil, soybean oil, canola oil, cottonseed oil, or rice bran oil. Two or more types of oil or fat may be contained.

The food composition in the present embodiment mixed with three times its mass of water (4-fold dilution) may be warmed without stirring for 45 minutes until its temperature rises to 90 °C, and, after the temperature rise, stirred for two minutes to have homogenous mixture. When the temperature then decreases to 60 °C, the viscosity at this time point may preferably be greater than or equal to 400 mPa·s, or more preferably, greater than or equal to 600 mPa·s. The viscosity may have any upper limit and may preferably be, for example, less than or equal to 4000 mPa·s. In other words, the viscosity may preferably be 400 to 4000 mPa·s inclusive, or more preferably, 600 to 4000 mPa·s inclusive. The viscosity can be measured with a method using a B-type viscometer described in Experiments 1 and 2.

The food composition in the present embodiment may further contain one or more other food components as appropriate. Examples of other food components may include glucide, dextrin, curry powder, spices, flavor enhancers, vegetable extract, vegetable paste, meat extract, dairy products, acidifiers, antioxidants, and thickeners.

### Method for Producing Liquid or Pasty Packaged Food Composition

The liquid or pasty packaged food composition according to one or more embodiments of the present invention can be produced by producing the liquid or pasty food composition (the food composition in the present embodiment) and storing the liquid or pasty food composition in a container.

The method for producing the food composition in the present embodiment is not limited and may be a method appropriate for a target food composition.

The food composition in the present embodiment that has undergone heat sterilization may be stored and sealed in the container and further undergo heat sterilization, or the food composition in the present embodiment stored and sealed in the container without sterilization may undergo heat sterilization. The temperature for heat sterilization may have an upper limit preferably lower than or equal to 110 °C, or more preferably, lower than or equal to 100 °C, and a lower limit preferably higher than or equal to 60 °C, or more preferably, higher than or equal to 70 °C, or still more preferably, higher than or equal to 75 °C. In other words, the heat sterilization temperature may preferably be 60 to 110 °C inclusive, or more preferably, 70 to 110 °C inclusive, or 75 to 100 °C inclusive. When heated and sterilized at the temperature as described above, specifically compared with retort heat sterilization that heats and sterilizes an item at a temperature higher than or equal to 120 °C, the food composition has a smaller increase in viscosity and is easily removed from the container. The food composition is also less likely to be damaged from heat sterilization, and when the food composition is mixed with water, a liquid food product with a favorable flavor can be produced.

The heated and sterilized liquid or pasty packaged food composition may be produced with a method comprising (a) producing the liquid or pasty food composition, (b1) heating and sterilizing the liquid or pasty food composition produced in (a) at a temperature lower than or equal to 110 °C, and (c1) storing and sealing the liquid or pasty food composition heated and sterilized in (b1) in the container. Alternatively, the heated and sterilized liquid or pasty packaged food composition may be produced with a method comprising (a) producing the liquid or pasty food composition, (b2) storing and sealing the liquid or pasty food composition produced in (a) in the container, and (c2) heating and sterilizing the liquid or pasty food composition in the container sealed in (b2) at a temperature lower than or equal to 110 °C.

The temperature in (b1) or (c2) may be, more preferably, the temperature range described above as the temperature for heat sterilization.

The processing (a) may include mixing the pregelatinized crosslinked starch and water, and one or more additional components described above as appropriate, at a temperature preferably lower than or equal to 100 °C, or more preferably, lower than 70 °C, or still more preferably, lower than 60 °C, or for example, at a temperature of preferably 4 to 110 °C inclusive, or more preferably, higher than or equal to 4 °C and lower than 70 °C, or still more preferably, higher than or equal to 4 °C and lower than 60 °C. When the processing (a) is performed under the temperature condition as described above, the viscosity is less likely to increase. The resulting liquid or pasty food composition can have a viscosity appropriate for storage in or removal from the container.

### Method for Producing Viscous Liquid Food Product Using Liquid or Pasty Packaged Food Composition

The liquid or pasty packaged food composition according to one or more embodiments of the present invention may be used for producing the viscous liquid food product as described above.

More specifically, a method for producing the viscous liquid food product may comprise removing, from the container of the liquid or pasty packaged food composition according to one or more embodiments of the present invention, the liquid or pasty food composition, mixing the liquid or pasty food composition with water, and heating a mixture of the liquid or pasty food composition and the water.

The amount of the water may be any appropriate amount. For example, 1 to 10 times the amount (by mass) of the food composition of water may be mixed with the food composition.

Heating the mixture can cause the mixture to be viscous and can produce a viscous liquid food product. In addition to the liquid or pasty food composition and water, ingredients such as vegetables and meat may be added as appropriate. The water may or may not be warm. Water with a temperature of 5 to 20 °C, such as tap water with no temperature control, may be used. As described above, even when no stirring is performed throughout the processing from mixing with water to cooking, gentle stirring after the completion of cooking alone can reduce undissolved residues or lumps.

### Examples

### 1. Experiment 1

### 1-1. Composition of Ingredients

The ingredients shown in the table below were mixed at a temperature of about 50 °C and sealed in flexible pouches. Packaged pasty food compositions in Working Example 1-1 and Comparative Example 1-1 were produced.

**[Table 1]**

| | WORKING EXAMPLE 1-1 | COMPARATIVE EXAMPLE 1-1 |
|---|---|---|
| PREGELATINIZED CROSSLINKED STARCH ¹⁾ | 10 | 0 |
| PREGELATINIZED NON-CROSSLINKED STARCH ²⁾ | 4 | 0 |
| WHEAT FLOUR | 0 | 10 |
| CORN STARCH | 0 | 3 |
| MODIFIED STARCH ³⁾ | 0 | 2 |
| ADJUSTED LARD | 1 8 | 1 8 |
| REFINED PORK FAT | 8 | 8 |
| DEXTRIN | 0 | 7 |
| WATER | 1 9 | 1 1 |
| CURRY POWDER | 5 | 5 |
| SEASONING INGREDIENTS ⁴⁾ | 36 | 36 |
| TOTAL | 100 | 100 |

| | | |
|---|---|---|
| UNIT: PARTS BY MASS ¹⁾ PREGELATINIZED CROSSLINKED STARCH: PREGELATINIZED ACETYLATED DISTARCH ADIPATE DERIVED FROM POTATO ²⁾ PREGELATINIZED NON-CROSSLINKED STARCH: PREGELATINIZED WHEAT STARCH ³⁾ MODIFIED STARCH: CROSSLINKED CORN STARCH ⁴⁾ SEASONING INGREDIENTS: LIQUID, PASTY OR POWDERY SEASONING INGREDIENTS, SUCH AS VEGETABLE PASTES, SPICES, AND FLAVOR ENHANCERS | | |

### 1-2. Preparing Viscous Sauce

To a container of 3 L, 600 g of the pasty food composition in Working Example 1-1 or Comparative Example 1-1 removed from the pouch and three times the mass of the pasty food composition of water at about 20 °C were added. The content in the container was heated for 45 minutes until its temperature rose to 90 °C. When the temperature rise was complete, the content was stirred gently for two minutes with a ladle, and a viscous sauce was prepared. The content was not stirred when the ingredients were added to the container and before and during the temperature rise. The viscous sauce at 90 °C was filtered through a 2-mm-mesh sieve. The mass of residues on the sieve was measured. The percentage of the residues to the used pasty food composition was calculated. The viscous sauce after heating and stirring was adjusted to have a temperature of 60 °C. The viscosity was measured using a B-type viscometer (rotor No. 3, the rotation speed 12 rpm).

The table below shows the mass of the residues of the viscous sauces prepared from the pasty food composition in Working Example 1-1 and Comparative Example 1-1, the percentage of the residues to the pasty food composition, and the viscosity of the viscous sauces.

**[Table 2]**

| | WORKING EXAMPLE 1-1 | COMPARATIVE EXAMPLE 1-1 |
|---|---|---|
| MASS OF RESIDUES/600g | 11.5g | 42.0g |
| RESIDUE PERCENTAGE | 1.9% | 7.0% |
| VISCOSITY (AFTER HEATING AND STIRRING) | 810mPa·s | 390mPa·s |

The viscous sauce prepared from the pasty food composition in Comparative Example 1-1 containing non-pregelatinized (non-gelatinized) starch and no pregelatinized starch as starch provided a high residue percentage of 7.0% with many undispersed agglomerates (lumps), and had a low viscosity of 390 mPa·s.

In contrast, the viscous sauce prepared from the pasty food composition in Working Example 1-1 containing pregelatinized crosslinked starch and pregelatinized non-crosslinked starch as starch provided a low residue percentage of 1.9% with fewer lumps, and had a high viscosity of 810 mPa·s.

### 2. Experiment 2

### 2-1. Composition of Ingredients

The ingredients shown in the tables below were mixed at a temperature of about 50 °C, sealed in flexible pouches, and underwent heat sterilization. Packaged pasty food compositions in Working Examples 2-1 to 2-6 and Comparative Examples 2-1 and 2-2 were produced. In the heat sterilization, the sealed pouches were heated in warm water at 85 °C for 40 minutes and sterilized.

**[Table 3]**

| | | WORKING EXAMPLE 2-1 | WORKING EXAMPLE 2-2 | WORKING EXAMPLE 2-3 |
|---|---|---|---|---|
| PREGELATINIZED CROSSLINKED STARCH | | 8. 4 | 9. 2 | 8. 4 |
| | SOURCE | T APIOCA, MAIZE | MAIZE | POTATO |
| | CROSSLINKING METHOD | HYDROXYPROPYL PHOSPHATE CROSSLINKED | ACETYLATED ADIPATE CROSSLINKED | PHOSPHATE CROSSLINKED |
| PREGELATINIZED NON-CROSSLINKED STARCH | | - | - | - |
| WHEAT FLOUR | | 6.6 | 5.8 | 6.6 |
| PURE LARD | | 23.4 | 23.4 | 23.4 |
| REFINED PORK FAT | | 2.6 | 2.6 | 2.6 |
| WATER | | 19 | 19 | 19 |
| CURRY POWDER | | 5 | 5 | 5 |
| SEASONING INGREDIENTS (REFER TO EXPERIMENT 1) | | 35 | 35 | 35 |
| TOTAL | | 100 | 100 | 100 |

| | | | | |
|---|---|---|---|---|
| UNIT: PARTS BY MASS | | | | |

**[Table 4]**

| | | WORKING EXAMPLE 2-4 | WORKING EXAMPLE 2-5 | WORKING EXAMPLE 2-6 |
|---|---|---|---|---|
| PREGELATINIZED CROSSLINKED STARCH | | 8.4 | 9.2 | 8.4 |
| | SOURCE | MAIZE | POTATO | TAPIOCA |
| | CROSSLINKING METHOD | PHOSPHATE CROSSLINKED | ACETYLATED PHOSPHATE CROSSLINKED | PHOSPHATE CROSSLINKED |
| PREGELATINIZED NON-CROSSLINKED STARCH | | - | - | - |
| WHEAT FLOUR | | 6.6 | 5.8 | 6.6 |
| PURE LARD | | 23.4 | 23.4 | 23.4 |
| REFINED PORK FAT | | 2.6 | 2.6 | 2.6 |
| WATER | | 19 | 19 | 19 |
| CURRY POWDER | | 5 | 5 | 5 |
| SEASONING INGREDIENTS (REFER TO EXPERIMENT 1) | | 35 | 35 | 35 |
| TOTAL | | 100 | 100 | 100 |

| | | | | |
|---|---|---|---|---|
| UNIT: PARTS BY MASS | | | | |

**[Table 5]**

| | | COMPARATIVE EXAMPLE 2-1 | COMPARATIVE EXAMPLE 2-2 |
|---|---|---|---|
| PREGELATINIZED CROSSLINKED STARCH | | - | - |
| PREGELATINIZED NON-CROSSLINKED STARCH | | 8. 4 | 8. 4 |
| | SOURCE | TAPIOCA | POTATO |
| WHEAT FLOUR | | 6. 6 | 6. 6 |
| PURE LARD | | 23. 4 | 2 3. 4 |
| REFINED PORK FAT | | 2. 6 | 2. 6 |
| WATER | | 19 | 19 |
| CURRY POWDER | | 5 | 5 |
| SEASONING INGREDIENTS (REFER TO EXPERIMENT 1) | | 3 5 | 3 5 |
| TOTAL | | 100 | 100 |

| | | | |
|---|---|---|---|
| UNIT: PARTS BY MASS | | | |

### 2-2. Preparing Viscous Sauce

To a container of 3 L, 600 g of the pasty food composition in each of the working examples and comparative examples removed from the pouch and 1800 g (three times the mass of the pasty food composition) of water at about 20 °C were added. The content in the container was heated for about 30 to 40 minutes until its temperature rose to 90 °C. When the temperature rise was complete, the content was stirred gently for two minutes with a whisk, and a viscous sauce was prepared. The content was not stirred when the ingredients were added to the container and before and during the temperature rise. The viscous sauce at 90 °C was filtered through a 2-mm-mesh sieve. The mass of residues on the sieve was measured. The percentage of the residues to 600 g of the used pasty food composition was calculated. The viscous sauce after heating and stirring was adjusted to have a temperature of 60 °C. The viscosity was measured using a B-type viscometer (rotor No. 3, the rotation speed 12 rpm).

The table below shows the mass of the residues of the viscous sauces prepared from the pasty food compositions in the working examples and the comparative examples, the percentage of the residues to the pasty food composition, and the viscosity of the viscous sauces.

**[Table 6]**

| | WORKING EXAMPLE 2-1 | WORKING EXAMPLE 2-2 | WORKING EXAMPLE 2-3 | WORKING EXAMPLE 2-4 | WORKING EXAMPLE 2-5 | WORKING EXAMPLE 2-6 | COMPARATIVE EXAMPLE 2-1 | COMPARATIVE EXAMPLE 2-2 |
|---|---|---|---|---|---|---|---|---|
| RESIDUES (g) /600g | 12.0 | 14.1 | 11.3 | 0 | 10.7 | 0 | 73.9 | 82.1 |
| RESIDUE PERCENTAGE (%) | 2.0 | 2.4 | 1.9 | 0 | 1.8 | 0 | 12.3 | 13.7 |
| VISCOSITY (AFTER HEATING AND STIRRING) (mPa·s) | 1420 | 2703 | 1430 | 1600 | 2800 | 1316 | 313 | 363 |

The viscous sauces prepared from the pasty food compositions in Comparative Examples 2-1 and 2-2 containing pregelatinized non-crosslinked starch and non-pregelatinized starch (wheat flour) as starch provided high residue percentages of 12.3% and 13.7%, respectively, with many undispersed agglomerates (lumps), and had low viscosities of 313 mPa·s and 363 mPa·s, respectively.

In contrast, the viscous sauces prepared from the pasty food compositions in Working Examples 2-1 to 2-6 containing pregelatinized crosslinked starch and non-pregelatinized starch (wheat flour) as starch provided a low residue percentage of 2.4% with fewer lumps, and had high viscosities of 1313 to 2800 mPa·s. The results revealed that the viscous sauces prepared by heating the pasty food compositions containing pregelatinized crosslinked starch diluted with water had fewer lumps and were sufficiently viscous, independently of the type of crosslinking in the pregelatinized crosslinked starch or the plant source.

### 3. Experiment 3

The same ingredients as in Working Examples 2-1 to 2-6 were mixed at a temperature of about 50 °C, heated to 100 °C and sterilized, and then stored and sealed in containers. Pasty food compositions in Working Examples 3-1 to 3-6 were thus obtained.

The obtained pasty food compositions in Working Examples 3-1 to 3-6 were diluted with water and heated using the method described above in 2-2. Preparing Viscous Sauce. Viscous sauces were thus prepared.

The viscous sauces prepared from the pasty food compositions in Working Examples 3-1 to 3-6 had fewer lumps and were sufficiently viscous, independently of the type of crosslinking in the pregelatinized crosslinked starch and the plant source.

## Claims

1. A liquid or pasty packaged food composition, comprising:
a liquid or pasty food composition containing pregelatinized crosslinked starch and water, the liquid or pasty food composition being water-based; and
a container storing the liquid or pasty food composition.

2. The liquid or pasty packaged food composition according to claim 1, wherein
the pregelatinized crosslinked starch is at least one selected from the group consisting of pregelatinized hydroxypropyl distarch phosphate, pregelatinized acetylated distarch adipate, pregelatinized distarch phosphate, and pregelatinized acetylated distarch phosphate.

3. The liquid or pasty packaged food composition according to claim 1 or claim 2, wherein
a content of the pregelatinized crosslinked starch is 0.1 to 50% by mass, inclusive, based on a total amount of the liquid or pasty food composition.

4. The liquid or pasty packaged food composition according to any one of clams 1 to 3, wherein
a content of the water is greater than or equal to 10% by mass and less than 70% by mass based on a total amount of the liquid or pasty food composition.

5. The liquid or pasty packaged food composition according to any one of claims 1 to 4, wherein
the liquid or pasty food composition further contains at least one selected from the group consisting of non-pregelatinized starch and a thickener.

6. The liquid or pasty packaged food composition according to claim 5, wherein
the liquid or pasty food composition contains less than or equal to 200 parts by mass of the non-pregelatinized starch with respect to 100 parts by mass of the pregelatinized crosslinked starch.

7. The liquid or pasty packaged food composition according to claim 5 or claim 6, wherein
the liquid or pasty food composition contains less than or equal to 100 parts by mass of the thickener with respect to 100 parts by mass of the pregelatinized crosslinked starch.

8. The liquid or pasty packaged food composition according to any one of claims 1 to 7, wherein
the liquid or pasty food composition further contains 1 to 40% by mass, inclusive, of at least one of an oil or a fat.

9. The liquid or pasty packaged food composition according to any one of claims 1 to 8, wherein
the liquid or pasty food composition is heated and sterilized at a temperature lower than or equal to 110 °C.

10. A method for producing the liquid or pasty packaged food composition according to claim 9, the method comprising:
(a) producing the liquid or pasty food composition; and
(b1 heating and sterilizing the liquid or pasty food composition produced in (a) at a temperature lower than or equal to 110 °C; and
(c1) storing and sealing the liquid or pasty food composition heated and sterilized in (b1) in the container, or
(b2) storing and sealing the liquid or pasty food composition produced in (a) in the container; and
(c2) heating and sterilizing the liquid or pasty food composition in the container sealed in (b2) at a temperature lower than or equal to 110 °C.

11. A method for producing a viscous liquid food product, the method comprising:
removing, from the liquid or pasty packaged food composition according to any one of claims 1 to 9, the liquid or pasty food composition;
mixing the liquid or pasty food composition with water; and
heating a mixture of the liquid or pasty food composition and the water.
